# EUROPÄISCHE PATENTSCHRIFT

(11) **EP 3 688 307 B1**
(45) Veröffentlichungstag und Bekanntmachung des Hinweises auf die Patenterteilung: **02.10.2024**
(21) Anmeldenummer: 18765571.7
(22) Anmeldetag: 23.08.2018
(51) Int. Cl.: F03D 13/25, E04C 5/10

(54) **SPANNGLIED MIT SCHLAUCHUMHÜLLUNG**
TENSIONING TENDON WITH TUBULAR COVERING
ÉLÉMENT DE SERRAGE ÉQUIPÉ D'UNE ENVELOPPE TUBULAIRE

(30) Priorität: 29.09.2017 DE 102017217471
(43) Veröffentlichungstag der Anmeldung: 05.08.2020
(73) Patentinhaber: Dywidag-Systems International GmbH, 80796 München (DE)
(72) Erfinder: BRAND, Werner, 85356 Freising (DE)
(74) Vertreter: Weickmann & Weickmann PartmbB
(86) Internationale Anmeldenummer: PCT/EP2018/072782
(87) Internationale Veröffentlichungsnummer: WO 2019/063216

(56) Entgegenhaltungen:
- EP-A2- 0 913 538
- WO-A1-2014/163501
- DE-A1- 3 126 208
- FRANK ADAM ET AL: "Das Schwimmende Offshore Fundament -GICON-SOF Space@Sea View project Compact and Robust Medium Wind Turbine (CART) View project", 7 July 2016 (2016-07-07), XP055534267, Retrieved from the Internet <URL:https://www.researchgate.net/profile/Frank_Adam/publication/301285177_Das_Schwimmende_Offshore_Fundament_-_GICON-SOF/links/577e488608aeaee3b283359d/Das-Schwimmende-Offshore-Fundament-GICON-SOF.pdf> [retrieved on 20181213]
- A SARKAR ET AL: "Effects of mooring line drag damping on response statistics of vessels excited by first- and second-order wave forces", OCEAN ENGINEERING, 1 January 2016 (2016-01-01), pages 667 - 686, XP055535596, Retrieved from the Internet <URL:http://publications.lib.chalmers.se/records/fulltext/237652/237652.pdf> [retrieved on 20181217], DOI: 10.1016/S0029-8018(99)00014-1

## Beschreibung

Die Erfindung betrifft ein Spannglied, welches zur Anordnung zwischen zwei Abschnitten eines Bauwerks ausgelegt und bestimmt ist, umfassend eine Mehrzahl von in Längsrichtung des Spannglieds angeordneten Spannelementen und eine Umhüllung mit einer in Umfangsrichtung des Spannglieds geschlossenen Mantelfläche.

Üblicherweise kommen HDPE-Rohre als Umhüllung zum Einsatz. Sie haben den Vorteil, kostengünstig erhältlich zu sein. Aufgrund der ihnen inhärenten hohen Steifigkeit muss die HDPE-Rohrumhüllung, die eine Länge von über 100 m aufweisen kann, vor Ort auf der Baustelle aus HDPE-Rohrabschnitten vorbestimmter Länge durch Verschweißen hergestellt werden. Bei einer Biegung des HDPE-Rohrs besteht nämlich die Gefahr der Entstehung von spröden Rissen in der Wandung des HDPE-Rohrs, die dessen Hauptfunktion, nämlich die Spannelemente vor Korrosion zu schützen, in Frage stellen könnten. Zur Vermeidung von Rissbildung ist daher darauf zu achten, dass der Biegedurchmesser des HDPE-Rohrs mindestens 25-mal so groß ist wie dessen Außendurchmesser.

Man sieht leicht ein, dass eine werksseitige Vorfertigung und ein Straßentransport zur Baustelle im auf eine Transporttrommel aufgewickelten Zustand allenfalls dann in Betracht kommen, wenn der Außendurchmesser des HDPE-Rohrs weniger als 200 mm beträgt, und dass der Straßentransport aufgrund seiner übergroßen Breite von bis zu 5 m nur unter Einhaltung besonderer, insbesondere polizeilicher, Sicherungsmaßnahmen stattfinden kann. Diese Sicherungsmaßnahmen erhöhen aber wiederum die Gesamtkosten des Bauprojekts.

Als Beispiel sei hier das sogenannte "Repowering" von älteren Windparks genannt. Eine übliche Maßnahme bei einem derartigen "Repowering" besteht darin, Windtürme größerer Höhe zu errichten, um den in größerer Höhe stärkeren Wind ausnutzen zu können. Hierzu wird ein bereits bestehender Windturm durch von seiner Spitze schräg zum Boden verlaufende Abspannseile stabilisiert, so dass auf ihn ein weiterer Turmabschnitt aufgesattelt werden kann. Da der zwischen den Windtürmen des Windparks zur Verfügung stehende Raum relativ eng begrenzt ist, wird hier die werksseitige Vorfertigung und der Straßentransport von Seiten der Projektplaner bevorzugt.

Aber nicht nur beim Transport, sondern auch bei der Montage des Spannglieds am Bauwerk ist darauf zu achten, dass die vorstehend genannte Bemessungsregel für den Biegedurchmesser des HDPE-Rohrs eingehalten wird. Dies stellt die die Baumaßnahmen durchführenden Unternehmen gerade beim Einsatz von HDPE-Rohren mit einem Außendurchmesser von mehr als 400 mm, also einem zulässigen minimalen Biegedurchmesser von 10 m häufig vor große Probleme.

Hier ist als Beispiel die Errichtung von Offshore-Windkraftanlagen zu nennen, bei denen der Windturm auf einer im Wasser treibenden Plattform montiert ist, welche über Spannseile am Meeresgrund verankert ist. Zudem ist ein Ballastkörper vorgesehen, der über weitere Spannseile mit der Plattform verbunden ist. Diese weiteren Spannseile werden üblicherweise montiert, während der Ballastkörper wie die Plattform an der Wasseroberfläche treibt. Erst nach der Montage wird der Ballastkörper dann unter die Plattform abgesenkt. Man sieht leicht ein, dass die weiteren Spannseile während der Montage starker Biegung unterworfen sind. Und es ist problematisch, während der Montage den zulässigen minimalen Biegedurchmesser einzuhalten. Dies erfordert den Einsatz entsprechender Sicherungsmaßnahmen, was die Montage nicht nur zeitlich, sondern auch hinsichtlich des Materialeinsatzes aufwendiger und somit teurer macht.

Zudem kann eine Biegung der Spannseile auch im Betrieb auftreten. Hierbei können steife Anschlüsse einer HDPE-Verrohrung nahe der Verankerung hohen Biegespannungen ausgesetzt sein, die vor allem bei ermüdungswirksamer Belastung zu Schäden führen können. Gelenkige Anschlüsse sind jedoch entweder bezüglich der Dichtigkeit problematisch oder es besteht bei einer dichten Ausführung über eine spezielle Flanschverbindung mit einer Gummiverbindung das Problem, dass die Gummiverbindung eine geringere Steifigkeit aufweist als das Rohr und somit in Längsrichtung überdehnt werden kann.

Die Druckschrift DE 3126208 A1 offenbart ein dort als Kabel bezeichnetes Spannglied insbesondere für Hängebrücken. Das Kabel der D1 umfasst ein zentrales Spannelement aus einem Bündel von Einzeldrähten sowie eine mehrlagig aufgebaute schlauchartige Umhüllung aus einem Wellrohr aus Metall mit einer Polyethylen-Hülle, wobei der Raum zwischen dem Spannelement und dem Wellrohr mit einem nicht näher beschriebenen Korrosionsschutzmittel gefüllt ist. Zwar nennt die Druckschrift keine konkreten Zahlenwerte hinsichtlich eines beschädigungsfreien minimalen Biegedurchmessers, gibt jedoch an, dass das gesamte Kabel aufgerollt werden kann.

Die Druckschrift EP 0 913 538 A2 offenbart ein Spannglied mit mehreren Monolitzen, die in einem gemeinsamen, starren Hüllrohr aufgenommen sind. Weiterhin besteht jede Monolitze aus mehreren Drähten und weist eine biegsame Kunststoff-Ummantelung, die mit einem Befestigungselement versehen ist. Das Befestigungselement umfasst mehrere Rohrsegmente, die auf die Ummantelung aufgeschraubt sind. Es wird bei der Montage in ein in das Tragwerk einbetoniertes Rohr eingebracht, welches anschließend mit einer Verpressmasse gefüllt wird. Diese Masse steht nach dem Aushärten in Formschlusseingriff mit dem Befestigungselement, so dass die Ummantelung über das Befestigungselement zugfest an der Verankerung des Spannglieds befestigt ist.

Druckschrift WO 2014/163501 A1 beschreibt ein Beispiel für die Verankerung eines auf einer im Wasser treibenden Plattform montierten Windturms mittels Spannseilen.

Erfindungsgemäß wird ein Spannglied mit den Merkmalen von Anspruch 1 vorgeschlagen. Vorteilhafte Weiterbildungen sind in den Unteransprüchen beschrieben.

Schläuche sind erheblich flexibler als Rohre, sodass man sie mit einem deutlich geringeren Biegedurchmesser aufwickeln kann als Rohre. Zum anderen geht die Hauptfunktion der Umhüllung des Spannglieds, nämlich die Spannelemente vor Korrosion zu schützen, nicht auf die Steifigkeit der herkömmlich als Umhüllung verwendeten HDPE-Rohre zurück.

Bereits ein Schlauch, dessen minimaler Biegedurchmesser höchstens das 15-fache seines Außendurchmessers im kreisrunden Zustand beträgt, kann dann, wenn sein Außendurchmesser 200 mm beträgt, auf einen Durchmesser von 3 m aufgewickelt werden. Eine Transporttrommel mit einem Außendurchmesser von 3 m oder etwas mehr kann aber aufrecht stehend auf einem Tieflader transportiert werden, ohne die zulässige Fahrzeugbreite und Fahrzeughöhe für den normalen Straßenverkehr zu überschreiten. Beträgt der beschädigungsfreie minimale Biegedurchmesser des Schlauchs höchstens das 10-fache des Außendurchmessers des zu einem Kreiszylinder geformten Schlauchs, so kann ein Schlauch mit einem Außendurchmesser von 200 mm sogar auf einen Durchmesser von nur 2 m aufgewickelt werden, sodass die Transporttrommel im normalen Straßenverkehr sogar liegend transportiert werden könnte.

Man sieht leicht ein, dass die erfindungsgemäßen Schläuche auch bei der Montage der Ballastkörper von Offshore-Windkraftanlagen mit Vorteil als Umhüllung für die Spannelemente des Spannglieds eingesetzt werden können.

Die Hauptfunktion des Korrosionsschutzes könnte zwar grundsätzlich auch durch einen einlagig ausgebildeten Schlauch bereitgestellt werden. Häufig ergeben sich jedoch auch noch andere Anforderungen, die von der Umhüllung erfüllt werden müssen. In diesem Fall ist es vorteilhaft, wenn der Schlauch mehrlagig ausgebildet ist.

Beispielsweise kann vorgesehen sein, dass der Schlauch wenigstens eine Lage umfasst, die eine aus Textilmaterial gefertigte Verstärkungsschicht aufweist. Das Textilmaterial kann dabei ein Gewebe, ein Gestrick, ein Geflecht, ein Gewirke und dergleichen umfassen. Im Hinblick auf eine hohe Elastizität, insbesondere Längselastizität, des Schlauchs ist insbesondere der Einsatz von Geweben und Gestricken vorteilhaft. Durch Wahl eines geeigneten Materials kann die aus Textilmaterial gefertigte Verstärkungsschicht die jeweils gewünschte Verstärkungseigenschaft aufweisen. Beispielsweise kann ein aus Polyamid gefertigtes Textil eine hohe Widerstandsfähigkeit gegenüber Schlagbeanspruchung bereitstellen, während ein mit Flammschutzadditiven gefertigtes Textilmaterial eine hohe Widerstandsfähigkeit gegenüber Feuer bereitstellen kann.

Grundsätzlich kann aber auch an den Einsatz von textilfreien Verstärkungsschichten gedacht werden. Beispielsweise verfügt synthetischer Kautschuk über hohe Brandschutzeigenschaften.

Im Hinblick auf den Korrosionsschutz der Spannelemente ist es ferner vorteilhaft, wenn das Textilmaterial in ein weiteres, vollwandig ausgebildetes Material eingebettet ist. Zur Erhöhung der Elastizität, insbesondere der Längselastizität, der Verstärkungsschicht kann die aus Textil gefertigte Verstärkungsschicht beispielsweise gummiert ausgebildet sein.

Zur Erhöhung der Elastizität, insbesondere der Längselastizität kann der Schlauch aber auch wenigstens eine aus Gummi oder/und einem gummiartigen Material gefertigte Lage aufweisen.

Grundsätzlich ist es denkbar, das Lumen des Schlauchs für den Transport auf ein Minimum zu reduzieren, indem man ihn nach Art eines Feuerwehrschlauchs im flachgedrückten Zustand aufrollt. In diesem Fall kann der Schlauch zum Einführen der Spannelemente wieder ausgeweitet werden, beispielsweise indem der zum Einführen der Spannelemente verwendeten Lanze über eine Leitung Druckluft zugeführt wird, welche den Schlauch unmittelbar vor der Spitze der Lanze aufbläst.

Zur Erleichterung des Einführens der Spannelemente könnte es jedoch vorteilhaft sein, wenn der Schlauch eine inhärente Formstabilität aufweist. Dies kann beispielsweise dadurch erreicht werden, dass der Schlauch wenigstens eine Lage umfasst, die eine aus Metall oder/und Kunststoff gefertigte Verstärkungswendel aufweist. Die Verwendung einer Wendel ist dabei auch im Hinblick auf die Elastizität, insbesondere die Längselastizität, des Schlauchs vorteilhaft.

Um beispielsweise beim "Repowering" bestehender Windkraftparks durch das Verspannen der bestehenden Windtürme mit dem Untergrund nicht neue Risiken heraufzubeschwören, beispielsweise durch die Möglichkeit des Anpralls gegen eines der hierfür vorgesehenen Spannglieder bzw. Spannseile, wird in Weiterbildung der Erfindung vorgeschlagen, dass der Schlauch oder wenigstens eine von außen sichtbare Lage des Schlauchs signalfarben gefärbt ist. Durch ein derartiges Einfärben der sichtbaren Oberfläche des Spannglieds kann dessen Erkennbarkeit verbessert werden.

Wie bereits mehrfach erwähnt, ist es vorteilhaft, wenn der Schlauch elastisch, insbesondere längselastisch, ausgebildet ist.

Ein weiteres Problem, dass sich bei gattungsgemäßen Spanngliedern stellt, ist die Induzierung von Schwingungen in einem gespannten Spannglied durch Wind und Wetter. Um diesem Problem auch bei der Verwendung eines Schlauchs als Umhüllung begegnen zu können, wird vorgeschlagen, dass der Schlauch an seiner Außenoberfläche wenigstens ein Element zur Reduzierung von witterungsinduzierten Schwingungen des Spannglieds aufweist. Dieses Element kann beispielsweise ein zusätzliches Element sein, das auf der Außenoberfläche des Schlauchs befestigt sein kann, beispielsweise durch Verkleben, Verschweißen und dergleichen. Es ist jedoch auch möglich, diese Elemente durch eine bewusst herbeigeführte Faltenbildung an der Außenoberfläche des Schlauchs vorzusehen. Hierzu kann der Schlauch beispielsweise um die Längsachse des Spannglieds verwunden werden, sodass es zur mehr oder weniger regelmäßigen Bildung von wendelartig verlaufenden Falten kommt.

Zur Stabilisierung der Gestalt des Schlauchs ist erfindungsgemäß vorgesehen, dass der Schlauch gasdicht ausgebildet ist. Daher ist es möglich, den Schlauch mit Druckgas aufzublasen, sodass er eine im Wesentlichen kreiszylindrische Gestalt annimmt. In diesem Zusammenhang ist weiter vorgesehen, dass der Schlauch an wenigstens einem seiner Enden, vorzugsweise an seinen beiden Enden, gasdicht mit einem Anschlusselement verbunden ist, welches die Mehrzahl von Spannelementen gasdicht umgibt. Ein gasdichter und gleichzeitig elastischer, insbesondere längselastischer, Schlauch hat den weiteren Vorteil erhöhten Korrosionsschutzes, da er sich beim Spannen der Spannelemente dehnen kann, während bei Verwendung von herkömmlichen HDPE-Rohren als Umhüllung den Spannende des Spannglieds benachbart ein HDPE-Teleskoprohr zum Einsatz kam, welches das Eindringen von Feuchtigkeit, beispielsweise Luftfeuchtigkeit, nicht verhindern konnte.

Erfindungsgemäß ist vorgesehen, dass der Schlauch an wenigstens einem seiner Enden, vorzugsweise an seinen beiden Enden, zugfest und bevorzugt auch biegesteif mit einem Anschlusselement verbunden ist. Des Weiteren kann die Anschlussverbindung zu einem gewissen Maß elastisch ausgebildet sein, um Biegebelastungen infolge von Winkelverdrehungen der Seile abzutragen. Solche Verbindungen haben den Vorteil von geringeren Schäden an den Anschlüssen der Schläuche zu den Spanngliedern, bzw. deren Verankerungen vor allem bei ermüdungswirksamer Belastung.

Nachzutragen ist noch, dass unter einem Spannelement beispielsweise eine Litze oder aber auch ein Draht verstanden werden kann, der zu anderen Drähten vorzugsweise parallel verläuft.

Nachzutragen ist noch Folgendes: Da sich die Flexibilität von Materialien in Abhängigkeit von der Temperatur verändert, sei an dieser Stelle darauf hingewiesen, dass sich die vorstehend angegebenen beschädigungsfreien, minimalen Biegedurchmesser auf eine Temperatur von etwa 20 °C beziehen.

Die Erfindung wird im Folgenden anhand der beigefügten Zeichnungen an Ausführungsbeispielen näher erläutert werden. Es stellt dar:
- FIG. 1A: ein erfindungsgemäßes Spannglied im Querschnitt,
- FIG. 1B: ein erfindungsgemäßes Spannglied mit Wendeln im Querschnitt,
- FIG. 2: ein erfindungsgemäßes Spannglied im Teillängsschnitt,
- FIG. 3: eine schematische Darstellung einer Off-Shore-Windkraft-Anlage, die zu ihrem finalen Verankerungsort verbracht wird und in welcher erfindungsgemäße Spannglieder verbaut sind,
- FIG. 4: eine Off-Shore-Windkraft-Anlage im fertig montierten Zustand, in der erfindungsgemäße Spannglieder verbaut sind,
- FIG. 5: einen Turm einer On-Shore-Windkraft-Anlage der mit mehreren erfindungsgemäßen Spanngliedern ausgestattet wird.

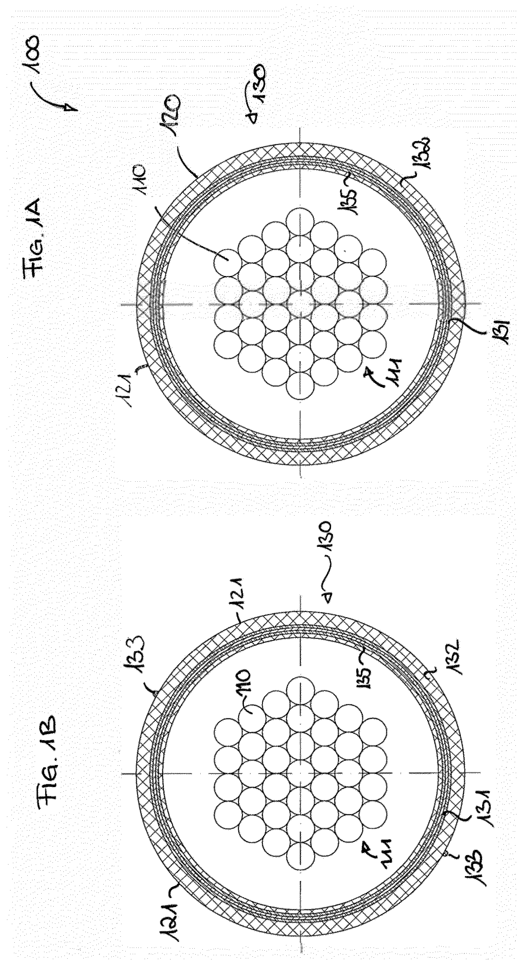

In FIG. 1 ist ein erfindungsgemäßes Spannglied ganz allgemein mit 100 bezeichnet. Dieses Spannglied 100 ist zur Anordnung zwischen zwei Abschnitten eines Bauwerks ausgelegt und bestimmt. Es umfasst eine Mehrzahl von in Längsrichtung des Spanngliedes 100 angeordneten Spannelementen 110 und eine Umhüllung 120 mit einer in Umfangsrichtung des Spanngliedes 100 geschlossenen Mantelfläche 121.

Das Spannglied 100 kann unter anderem dazu dienen, eine Off-Shore-Windkraft-Anlage mit einer Plattform unter Wasser zu verbinden oder Türme von On-Shore-Windkraft-Anlagen abzuspannen. Es ist jedoch auch jede andere Funktion/Bauwerk denkbar, für die/in der Spannglieder eingesetzt werden können.

Das Bündel 111 von Spannelementen 110 ist bevorzugt in der Mitte des Spannglieds 100 angeordnet. Es kann jedoch auch an jeder anderen Position innerhalb der Umhüllung 120 des Spannglieds 100 angeordnet sein. Die Umhüllung 120 ist als Schlauch 130 ausgebildet.

Die Spannelemente 110 können als Litzen oder Paralleldrähte aus einem metallischen Material, insbesondere Stahl, gebildet sein.

Der beschädigungsfreie minimale Biegedurchmesser des Schlauchs 130 beträgt höchstens das 15-fache, vorzugsweise höchstens das 10-fache, des Außendurchmessers des zu einem Kreiszylinder geformten Schlauches 130. Diese Werte beziehen sich auf die Materialeigenschaften des Schlauches 130 bei einer Temperatur von ca. 20°C.

Der Schlauch 130 kann darüber hinaus mehrlagig ausgebildet sein, wie es aus FIG. 1 ersichtlich ist. Eine Lage hiervon kann wenigstens eine Verstärkungsschicht 131 aufweisen. Diese Verstärkungsschicht 131 kann insbesondere aus einem Textilmaterial oder aus einem synthetischen Kautschuk gefertigt sein. Das Textilmaterial oder der Kautschuk kann in ein weiteres, vollwandig ausgebildetes Material 132 eingebettet sein. Das Textilmaterial der Verstärkungsschicht 131 kann beispielsweise ein Gewebe, ein Gestrick, ein Geflecht, ein Gewirke oder dergleichen sein. Darüber hinaus kann das Textilmaterial mit Additiven gefertigt sein, die dem Textilmaterial gewünschte Eigenschaften verleihen. Hierbei kann beispielsweise an Flammschutzadditive gedacht werden, die das Textilmaterial flammresistent ausbilden, oder es kann an eine Zugabe zu oder vollständige Ausbildung der Verstärkungsschicht 131 aus Polyamid, welches eine hohe Widerstandsfähigkeit gegenüber Schlagbeanspruchungen bereitstellt, gedacht werden. Darüber hinaus kann der Schlauch 130 wenigstens eine aus Gummi oder einem gummiartigen Material gefertigte Lage aufweisen. Die Schlauch 130 kann jedoch aus einem anderen Material und in einer anderen Anordnung der ggf. vorhandenen Lagen gebildet sein, oder gar einlagig gebildet sein, solange mindestens die Bedingungen von Anspruch 1 erfüllt sind, unter anderem dass der beschädigungsfreie minimale Biegedurchmesser des Schlauchs 130 höchstens das 15-fache des Außendurchmessers des zu einem Kreiszylinder geformten Schlauches 130 beträgt.

Der Schlauch 130 kann elastisch, insbesondere längselastisch, ausgebildet sein. Zur Erreichung einer gewissen Elastizität, bzw. zur Erhöhung der inhärenten Elastizität kann die Verstärkungsschicht 131 bevorzugt ein Gewebe oder der Gestrick sein. Darüber hinaus kann zur Erhöhung der Elastizität des Schlauches 130 die Verstärkungsschicht 131 gummiert ausgebildet sein. Auch eine Lage aus Gummi oder gummiartigem Material, wie oben bezeichnet, erhöht die Elastizität des Schlauches 130.

Des Weiteren kann der Schlauch 130 durch Spiraleinlagen/eine Spiralschicht eine formstabile, runde Form aufweisen. Diese Spiraleinlagen/Spiralschicht können/kann aus einem metallischen Material oder jedem anderen geeigneten Material gebildet sein und können/kann in der oder an der Umhüllung 120 über die ganze Länge des Schlauches 130 oder nur auf einem Teil der Länge des Schlauches 130, insbesondere an dessen Endbereichen, angeordnet sein. Alternativ kann der Schlauch 130, wenn er sich in einem flachen Zustand befinden sollte, mittels Druckluft wieder aufgeweitet werden. Hierfür kann beispielsweise über die zum Einführen der Spannelemente 110 verwendete Lanze Druckluft in den Schlauch 130 eingeleitet werden. Dadurch wird der Schlauch 130 unmittelbar vor der Lanze aufgeblasen und so in Form gebracht, beispielsweise in eine kreiszylindrische Form.

Die Spiraleinlagen/Spiralschicht kann in oder an der Umhüllung 120 als eine Lage 135 gebildet sein, die wenigstens einen aus Metall oder aus Kunststoff gefertigten Verstärkungswendel aufweist oder als Spiraleinlageschicht ausgebildet ist. So eine Lage 135 aus Verstärkungswendeln kann gegebenenfalls auch nachträglich an dem Schlauch 130 angebracht werden.

Um möglichen Gefahren zu begegnen, kann der Schlauch 130 auch signalfarben gefärbt sein. Dies wird dadurch erreicht, dass der Schlauch 130 in wenigstens einer von außen sichtbaren Lage des Schlauchs 130 entsprechend eingefärbt wird oder eine entsprechend gefärbte Lage für die Mantelfläche 121 der Umhüllung 120 des Schlauches 130 verwendet wird.

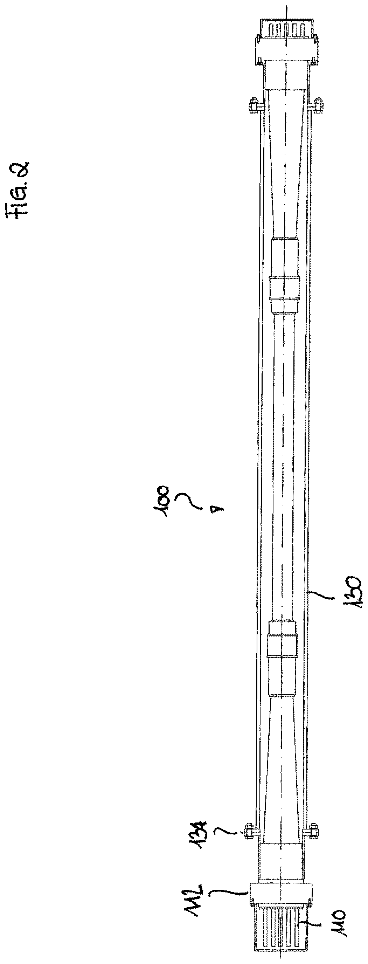

Des Weiteren kann der Schlauch 130 an der Außenoberfläche der Umhüllung 120 wenigstens ein Element 133 zur Reduzierung von witterungsinduzierten Schwingungen des Spannglieds 100 aufweisen. Dieses Element 133 kann insbesondere ein zusätzliches Element 133 sein, das auf der Außenoberfläche der Umhüllung 120 des Schlauchs 130 befestigt sein kann. Die Befestigung kann hierbei durch Verkleben, Verschweißen oder Ähnlichem erfolgen. Es ist jedoch auch möglich, diese Elemente 133 durch eine bewusst herbeigeführte Faltenbildung an der Außenoberfläche der Umhüllung 120 des Schlauchs 130 vorzusehen. Hierzu kann der Schlauch 130 insbesondere um die Längsachse des Spannglieds 100 verwunden werden, sodass es zu einer mehr oder weniger regelmäßigen Bildung von wendelartig verlaufenden Falten (nicht gezeigt) kommt. Die Elemente 133 können zwischen einzelnen Elementstücken 133 Abstände aufweisen. Es können auch mehr als zwei Elemente 133, wie es z.B. in der FIG. 1B der Fall ist, auf die Mantelfläche 121 aufgebracht werden. Der Schlauch 130 ist über geeignete Anschlusselemente 134 an dem Spannglied 100 bzw. genauer an dessen Verankerung 112 befestigt, wie es in FIG. 2 gezeigt ist. Diese Verbindung an den Enden des Schlauches 130 mit dem Spannglied 100 ist zugfest und bevorzugt auch biegesteif durch Verwendung entsprechender Anschlusselemente 134 ausgeführt. Ein solches Anschlusselement 134 ist erfindungsgemäß ein Flansch oder Halbschalenflansch.

Der Schlauch 130 ist in etwa so lang wie das Spannglied 100, so dass der Schlauch 130 in den Endbereichen des Spannglieds 100, bzw. in der Nähe zu dessen Verankerung 112 befestigt werden kann, wie es aus der FIG. 2 ersichtlich ist. Der Schlauch 130 kann jedoch alternativ kürzer sein als das Spannglied 100 und mittels geeigneter Kopplungselemente oder Verlängerungselemente in den Endbereichen des Spanngliedes 100 befestigt sein. Dies wird durch Flansche oder Halbschalenflansche realisiert. Des Weiteren können an den Enden des Schlauches 130 Schläuche mit einem größeren Durchmesser angeordnet werden, um auf einer freien Länge des Spannglieds 100 einen Schlauch 130 mit geringerem Durchmesser verwenden zu können. Alternativ oder zusätzlich können solche Schläuche, die an den Enden des Schlauches 130 befestigt sind, aus Stahl oder Polyethylen oder aus einem Material gebildet sein, dessen beschädigungsfreier minimaler Biegedurchmesser größer als das 15-fache des Außendurchmessers des zu einem Kreiszylinder geformten Schlauches 130 beträgt, so dass nur der Schlauch 130 auf der freien Länge des Spannglieds 100 aus einem Material besteht, dessen beschädigungsfreier minimaler Biegedurchmesser höchstens das 15-fache des Außendurchmessers des zu einem Kreiszylinder geformten Schlauches 130 beträgt.

Darüber hinaus ist der Schlauch 130 gasdicht ausgebildet. Dies wird durch ein Anschlusselement 134 erreicht, das einen gasdichten Anschluss des Schlauches 130 an die Verankerung 112 herstellt. Da der Schlauch 130 gasdicht ausgebildet ist, kann dieser ggf. zur Stabilisierung seiner Gestalt mit Druckgas aufgeblasen werden.

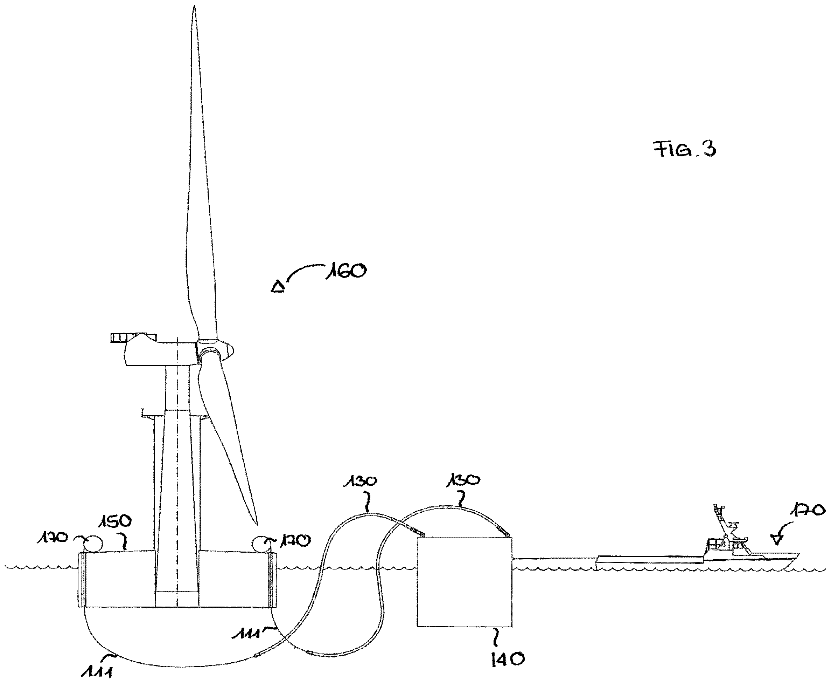

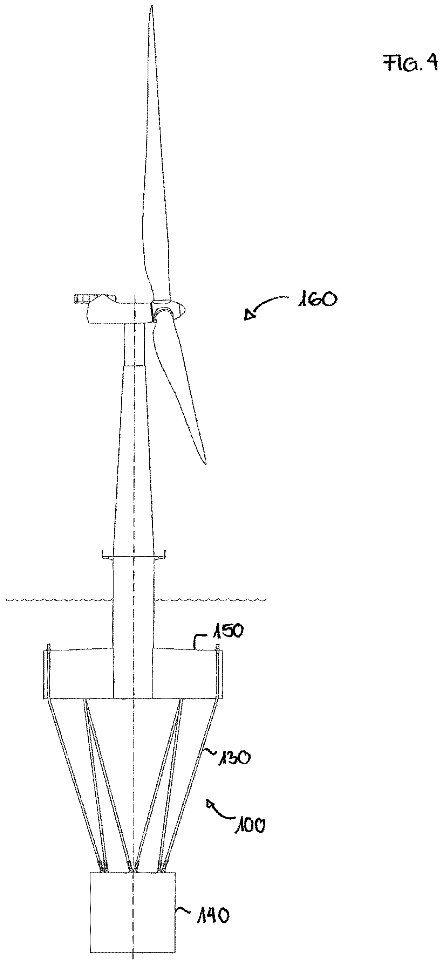

Erfindungsgemäße Spannglieder 100 können insbesondere zur Abspannung von Plattformen 150 mit Ballastkörpern 140 von Off-Shore-Windkraftanlagen 160 dienen. FIG. 3 zeigt eine schematische Darstellung einer Off-Shore-Windkraft-Anlage 160, die mittels eines Schiffes 170 zu ihrem finalen Verankerungsort verbracht wird und in welcher erfindungsgemäße Spannglieder 100 verbaut sind. Diese Spannglieder 100 dienen dazu, die Plattform 150, auf welcher die Off-Shore-Windkraftanlage 160 verankert ist und die in FIG. 3 noch auf dem Wasser treibt, mit einem Ballastkörper 140 zu verbinden, welcher an dem finalen Verankerungsort der Off-Shore-Windkraftanlagen 160 geflutet wird und sich dann unterhalb der Wasseroberfläche befindet. Dies ist aus FIG. 4 ersichtlich. Sobald der Ballastkörper 140 geflutet ist, werden die Spannglieder 100 gespannt und die freie, unbeschlauchte Länge des Bündels 111, welche sich zwischen dem Ende des Schlauches 130 und der Plattform 150 befindet, wird auf Trommeln 170 aufgewickelt oder gekappt und die Spannglieder 100 werden gespannt, so dass sich der in FIG. 4 gezeigte Zustand ergibt.

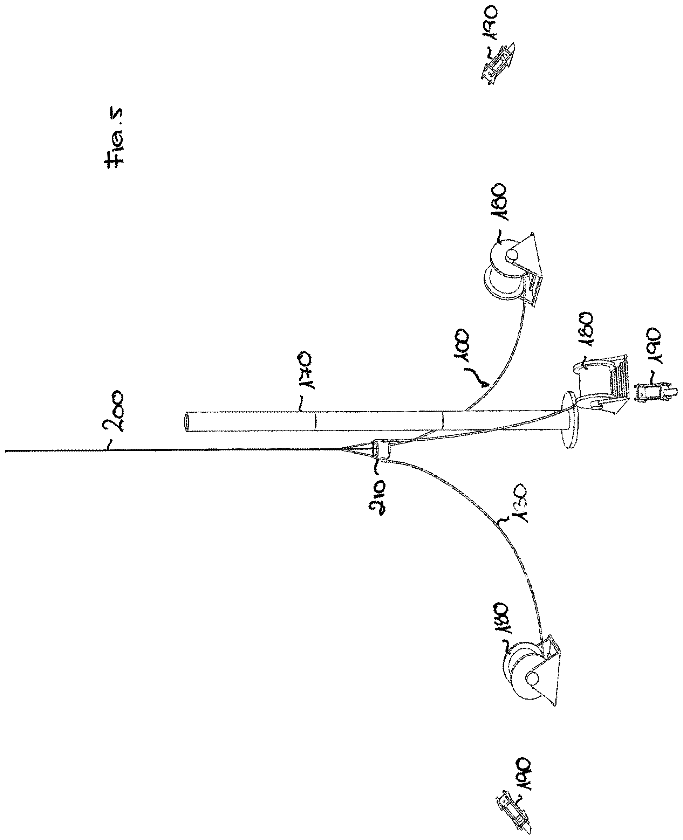

Darüber hinaus können erfindungsgemäße Spannglieder 100 auch zur nachträglichen oder initialen Abspannung von On-Shore-Windkraft-Türmen genutzt werden. Ein solcher Anwendungsfall ist in FIG. 5 dargestellt. Hierbei wird ein On-Shore-Windkraft-Turm 170 mit drei erfindungsgemäßen Spannglieder 100 versehen. Selbstverständlich können hierfür auch mehr oder weniger erfindungsgemäße Spannglieder 100 an dem Turm 170 angebracht werden. Die Spannglieder 100 werden, an einer Buchse 210 montiert, mit Hilfe eines Seils 200 über das Ende des Turms 170 gehoben und dort über die Buchse 210 an dem Turm 170 befestigt. Hierfür werden die Spannglieder auf Trommeln 180 bereitgestellt und von diesen abgewickelt. Nachdem die Buchse 210 an dem Turm befestigt wurde, werden die Spannglieder gekappt, an Verankerungspunkten 190 befestigt und gespannt.

Die erfindungsgemäßen Spannglieder 100 können, neben ihrer Verwendung für Off-Shore-Windkraftanlagen und On-Shore-Windkraftanlagen auch in Schrägseilbrücken oder als Hänger für Bogen- und Hängebrücken eingesetzt werden.

## Patentansprüche

1. Spannglied (100), welches zur Anordnung zwischen zwei Abschnitten eines Bauwerks ausgelegt und bestimmt ist, umfassend:
• eine Mehrzahl von in Längsrichtung des Spannglieds (100) angeordneten Spannelementen (110), die als Litzen oder Paralleldrähte aus einem metallischen Material ausgebildet sind, und
• eine Umhüllung (120) für die Mehrzahl von Spannelementen (110),
wobei die Umhüllung (120) als gasdichter Schlauch (130) mit einer in Umfangsrichtung des Spannglieds (100) geschlossenen Mantelfläche (121) ausgebildet ist, und der beschädigungsfreie minimale Biegedurchmesser des Schlauchs (130) höchstens das 15-fache des Außendurchmessers des zu einem Kreiszylinder geformten Schlauchs (130) beträgt,
und wobei der Schlauch (130) an wenigstens einem seiner Enden,
zugfest und gasdicht mit einem Anschlusselement (134) verbunden ist, wobei das Anschlusselement (134) die Mehrzahl von Spannelementen (110) gasdicht umgibt und dazu konfiguriert ist, den Schlauch (130) an einer Verankerung (112) des Spannglieds (100) zu befestigen, **dadurch gekennzeichnet, dass** das Anschlusselement (134) die Form eines Flansches oder Halbschalenflansches hat.

2. Spannglied (100) nach Anspruch 1,
**dadurch gekennzeichnet, dass** der beschädigungsfreie minimale Biegedurchmesser des Schlauchs (130) höchstens das 10-fache des Außendurchmessers des zu einem Kreiszylinder geformten Schlauchs (130) beträgt.

3. Spannglied (100) nach Anspruch 1 oder 2,
**dadurch gekennzeichnet, dass** der Schlauch (130) mehrlagig ausgebildet ist.

4. Spannglied (100) nach Anspruch 3,
**dadurch gekennzeichnet, dass** der Schlauch (130) wenigstens eine Lage umfasst, die eine aus Textilmaterial gefertigte Verstärkungsschicht (131) aufweist.

5. Spannglied (100) nach Anspruch 4,
**dadurch gekennzeichnet, dass** das Textilmaterial in ein weiteres, vollwandig ausgebildetes Material (132) eingebettet ist.

6. Spannglied (100) nach einem der Ansprüche 3 bis 5,
**dadurch gekennzeichnet, dass** der Schlauch (130) wenigstens eine aus Gummi oder/und einem gummiartigen Material gefertigte Lage aufweist.

7. Spannglied (100) nach einem der Ansprüche 3 bis 6,
**dadurch gekennzeichnet, dass** der Schlauch (130) wenigstens eine Lage umfasst, die eine aus Metall oder/und Kunststoff gefertigte Verstärkungswendel (135) aufweist.

8. Spannglied (100) nach einem der Ansprüche 1 bis 7,
**dadurch gekennzeichnet, dass** der Schlauch (130) oder wenigstens eine von außen sichtbare Lage des Schlauchs (130) signalfarben gefärbt ist.

9. Spannglied (100) nach einem der Ansprüche 1 bis 8,
**dadurch gekennzeichnet, dass** der Schlauch (130), insbesondere in Längsrichtung des Spannglieds (100), elastisch ausgebildet ist.

10. Spannglied (100) nach einem der Ansprüche 1 bis 9,
**dadurch gekennzeichnet, dass** der Schlauch (130) an seiner Außenoberfläche wenigstens ein Element (133) zur Reduzierung von witterungsinduzierten Schwingungen des Spannglieds (100) aufweist.

11. Spannglied (100) nach einem der Ansprüche 1 bis 10,
**dadurch gekennzeichnet,** der Schlauch (130) an seinen beiden Enden, zugfest und gasdicht mit einem jeweiligen Anschlusselement (134) verbunden ist, welches die Mehrzahl von Spannelementen (110) gasdicht umgibt.

12. Spannglied (100) nach einem der Ansprüche 1 bis 11,
**dadurch gekennzeichnet, dass** der Schlauch (130) an dem wenigstens einen seiner Enden biegesteif mit dem Anschlusselement (134) verbunden ist und vorzugsweise an seinen beiden Enden biegesteif mit einem jeweiligen Anschlusselement (134) verbunden ist.

## Claims

1. Tensioning member (100), which is designed and intended to be arranged between two sections of a structure, comprising:
• a plurality of tensioning elements (110) arranged in the longitudinal direction of the tensioning member (100), which are designed as strands or parallel wires made of a metallic material, and
• a casing (120) for the plurality of tensioning elements (110),
wherein the casing (120) is designed as a gas-tight hose (130) with a jacket surface (121) that is closed in the circumferential direction of the tensioning member (100), and the damage-free minimum bending diameter of the hose (130) is at most 15 times the external diameter of the hose (130) formed into a circular cylinder,
and wherein the hose (130) is connected at at least one of its ends in a tension-proof and gas-tight manner to a connecting element (134), wherein the connecting element (134) surrounds the plurality of tensioning elements (110) in a gas-tight manner and is configured to secure the hose (130) to an anchor (112) of the tensioning member (100), **characterised in that** the connecting element (134) has the shape of a flange or half-shell flange.

2. Tensioning member (100) according to claim 1,
**characterised in that** the damage-free minimum bending diameter of the hose (130) is at most 10 times the external diameter of the hose formed into a circular cylinder (130).

3. Tensioning member (100) according to claim 1 or 2,
**characterised in that** the hose (130) is designed in the form of multiple layers.

4. Tensioning member (100) according to claim 3,
**characterised in that** the hose (130) comprises at least one layer which has a reinforcing layer (131) made of textile material.

5. Tensioning member (100) according to claim 4,
**characterised in that** the textile material is embedded in another, solid-wall material (132).

6. Tensioning member (100) according to one of claims 3 to 5,
**characterised in that** the hose (130) has at least one layer made of rubber and/or a rubber-like material.

7. Tensioning member (100) according to one of claims 3 to 6,
**characterised in that** the hose (130) includes at least one layer which has a reinforcing coil (135) made of metal and/or plastic.

8. Tensioning member (100) according to one of claims 1 to 7,
**characterised in that** the hose (130) or at least an externally visible layer of the hose (130) is coloured in a signal colour.

9. Tensioning member (100) according to one of claims 1 to 8,
**characterised in that** the hose (130), in particular in the longitudinal direction of the tensioning member (100), is designed to be elastic.

10. Tensioning member (100) according to one of claims 1 to 9,
**characterised in that** the hose (130) has on its external surface at least one element (133) for reducing weather-induced vibrations of the tensioning member (100).

11. Tensioning member (100) according to one of claims 1 to 10,
**characterised in that** the hose (130) is connected at both ends in a tension-proof and gas-tight manner to a respective connecting element (134), which surrounds the plurality of clamping elements (110) in a gas-tight manner.

12. Tensioning member (100) according to one of claims 1 to 11,
**characterised in that** the hose (130) is rigidly connected at at least one of its ends to the connecting element (134) and is preferably rigidly connected at both its ends to a respective connecting element (134).

## Revendications

1. Organe de serrage (100), qui est conçu et destiné à être disposé entre deux parties d'un ouvrage, comprenant :
- une pluralité d'éléments de serrage (110) disposés dans la direction longitudinale de l'organe de serrage (100), qui sont conçus comme des torons ou des fils parallèles en matériau métallique et
- une enveloppe (120) pour la pluralité d'éléments de serrage (110),
dans lequel l'enveloppe (120) est conçue comme une gaine (130) étanche aux gaz avec une surface d'enveloppe (121) fermée dans la direction circonférentielle de l'organe de serrage (100), et le diamètre de flexion minimal sans endommagement de la gaine (130) représente au plus 15 fois le diamètre extérieur de la gaine (130) formée en un cylindre,
et dans lequel la gaine (130) est reliée, au niveau d'au moins une de ses extrémités, de manière anti-traction et étanche aux gaz avec un élément de raccordement (134), dans lequel l'élément de raccordement (134) entoure de manière étanche aux gaz la pluralité d'éléments de serrage (110) et est configuré pour fixer la gaine (130) au niveau d'un ancrage (112) de l'organe de serrage (100), **caractérisé en ce que** l'élément de raccordement (134) présente la forme d'une bride ou d'une bride à demi-coque.

2. Organe de serrage (100) selon la revendication 1,
**caractérisé en ce que** le diamètre de flexion minimal sans endommagement de la gaine (130) représente 10 fois le diamètre extérieur de la gaine (130) formée en un cylindre.

3. Organe de serrage (100) selon la revendication 1 ou 2,
**caractérisé en ce que** la gaine (130) est réalisée en plusieurs couches.

4. Organe de serrage (100) selon la revendication 3,
**caractérisé en ce que** la gaine (130) comprend au moins une couche qui présente une couche de renforcement (131) réalisée dans un matériau textile.

5. Organe de serrage (100) selon la revendication 4,
**caractérisé en ce que** le matériau textile est intégré dans un autre matériau (132) prévu sur toute la paroi.

6. Organe de serrage (100) selon l'une des revendications 3 à 5,
**caractérisé en ce que** la gaine (130) comprend au moins une couche constituée de caoutchouc et/ou d'un matériau de type caoutchouc.

7. Organe de serrage (100) selon l'une des revendications 3 à 6,
**caractérisé en ce que** la gaine (130) comprend au moins une couche qui comprend une spirale de renforcement (135) réalisée en métal et/ou en matière synthétique.

8. Organe de serrage (100) selon l'une des revendications 1 à 7,
**caractérisé en ce que** la gaine (130) ou au moins une couche, visible de l'extérieur, de la gaine (130) est colorée avec une couleur de signal.

9. Organe de serrage (100) selon l'une des revendications 1 à 8,
**caractérisé en ce que** la gaine (130) est conformée de manière élastique, plus particulièrement dans la direction longitudinale de l'organe de serrage (100).

10. Organe de serrage (100) selon l'une des revendications 1 à 9,
**caractérisé en ce que** la gaine (130) comprend, sur sa surface extérieure, au moins un élément (133) pour la réduction des vibrations induites par des intempéries de l'organe de serrage (100).

11. Organe de serrage (100) selon l'une des revendications 1 à 10,
**caractérisé en ce que** la gaine (130) est reliée, au niveau de ses deux extrémités, de manière résistante à la traction et étanche aux gaz, avec un élément de raccordement (134) respectif, qui entoure de manière étanche aux gaz la pluralité d'éléments de serrage (110).

12. Organe de serrage (100) selon l'une des revendications 1 à 11,
**caractérisé en ce que** la gaine (130) est reliée, au niveau de l'au moins une de ses extrémités, de manière rigide, avec l'élément de raccordement (134), et est reliée, de préférence au niveau de ses deux extrémités, de manière rigide, avec l'élément de raccordement (134) respectif.
